# EUROPEAN PATENT APPLICATION

(11) **EP 4 835 981 A1**
(43) Date of publication of application: **04.11.2026**
(21) Application number: 23962681.5
(22) Date of filing: 28.12.2023
(51) Int. Cl.: H01M 4/133, C01B 32/205, H01M 4/02

(54) **PREPARATION METHOD FOR NEGATIVE ELECTRODE MATERIAL FOR LITHIUM ION BATTERY, DESIGN METHOD OF PREPARATION PROCESS OF NEGATIVE ELECTRODE MATERIAL FOR LITHIUM ION BATTERY, AND LITHIUM ION BATTERY**

(71) Applicant: Shanghai Shanshan New Material Co., Ltd, Shanghai 201306 (CN)
(72) Inventor: QIAO, Jin, Shanghai 201306 (CN); WU, Xianbin, Shanghai 201306 (CN); LI, Fuying, Shanghai 201306 (CN); YANG, Xin, Shanghai 201306 (CN)
(74) Representative: karo IP
(86) International application number: PCT/CN2023/142796
(87) International publication number: WO 2025/138000

(57) **Abstract**

A design method for a preparation process of a negative electrode material for a lithium ion battery, a preparation process, and a lithium ion battery. The design method comprises: acquiring a target performance parameter of the negative electrode material, wherein the target performance parameter comprises at least one of the reversible gram capacity of the negative electrode material, the powder OI value of the negative electrode material, and direct current impedance data of button cell battery test of a lithium ion battery prepared from the negative electrode material; on the basis of the reversible gram capacity, designing a first median particle size of first powder formed by crushing the raw materials in a crushing step; and/or on the basis of the powder OI value, designing the granulation degree of the first powder in a granulation step; and/or on the basis of the direct current resistance data, designing the coating amount of a coating layer formed in a coating treatment step, wherein the coating layer is formed on a surface of the core of the negative electrode material formed after a graphitization step.

## Description

### TECHNICAL FIELD

The present application relates to the field of lithium ion batteries, and in particular to a preparation method for a negative electrode material for a lithium ion battery, a design method for a preparation process of a negative electrode material for a lithium ion battery, and a lithium ion battery.

### BACKGROUND

The development of lithium ion batteries is in full swing, the demand for battery applications is changing with each passing day, and the demand for negative electrode materials is also gradually growing. The industry usually requires negative electrode materials to have high energy density, excellent fast charging performance, low direct current resistance (DCR), and small electrode sheet expansion performance, which puts higher requirements on the product development of negative electrode materials.

Graphite is a common negative electrode material for lithium ion batteries. The raw material of graphite negative electrodes is mainly composed of graphite particles. Graphite is a crystal structure composed of carbon atoms and has the characteristics of layered arrangement. The raw material of graphite negative electrodes usually exists in the form of natural graphite, artificial graphite, or graphene.

Artificial graphite negative electrode material is a material with a certain particle size distribution obtained by subjecting raw materials such as needle coke, petroleum coke, pitch coke, and the like to crushing, granulation, and other processes, and then subjecting the material to high-temperature graphitization treatment to form a graphite flake structure.

At present, research on artificial graphite negative electrode materials is mainly focused on the study of preparation methods. It is not possible to correlate the product parameters of each step in the preparation process of graphite negative electrode materials with the performance of the finally formed graphite negative electrode materials, and then determine whether the graphite negative electrode materials can achieve specific battery cell performance and functions through the product parameter indicators of the graphite negative electrode materials.

### SUMMARY

One aspect of the present application provides a design method for a preparation process of a negative electrode material for a lithium ion battery, the preparation process comprising pulverization, granulation, graphitization, coating treatment, and carbonization treatment steps, the design method comprising: acquiring target performance parameters of the negative electrode material, the target performance parameters comprising at least one of the reversible gram capacity of the negative electrode material, the powder orientation index (OI) value of the negative electrode material, and direct current resistance data of a lithium ion battery button cell test prepared using the negative electrode material; designing a first median particle size of first powder formed by pulverizing raw materials in the pulverization step according to the reversible gram capacity of the negative electrode material; and/or designing the granulation degree of the first powder in the granulation step according to the powder OI value of the negative electrode material, the granulation degree being the difference between the second median particle size of the first powder after granulation and the first median particle size before granulation; and/or designing the coating amount of a coating layer formed in the coating treatment step according to the DC resistance data of the lithium ion battery button cell test prepared using the negative electrode material, the coating layer being formed on the surface of the core of the negative electrode material formed after the graphitization step, the coating layer being a carbon coating layer having an amorphous structure.

In some embodiments of the present application, designing the first median particle size of the first powder formed by pulverizing the raw materials in the pulverization step according to the reversible gram capacity of the negative electrode material comprises: selecting raw materials for preparing the negative electrode material, and obtaining the volatile matter of the raw materials; and designing the first median particle size of the first powder according to the volatile matter of the raw materials and the reversible gram capacity of the negative electrode material.

In some embodiments of the present application, the first median particle size of the first powder is D₁50, then 3 ≤ D₁50×(0.71+0.39×D₁50/T_{volatile matter})+M_{reversible} specific _{apacity}/372 ≤ 120, where T_{volatile matter} is the volatile matter of the raw material, and M_{reversible} specific capacity is the reversible gram capacity of the negative electrode material.

In some embodiments of the present application, the volatile matter of the raw material is 0.2% to 20%, the reversible gram capacity of the negative electrode material is 320 to 365 mAh/g, and the first median particle size of the first powder is 5 to 20 µm.

In some embodiments of the present application, designing the granulation degree of the first powder in the granulation step according to the powder OI value of the negative electrode material comprises: denoting the powder OI value of the negative electrode material as G_{OI}, and the granulation degree as D_{granulation} degree, then 1 ≤ 100/(D_{granulation degree}+3.3×G_{OI}) ≤ 25.

In some embodiments of the present application, the powder OI value of the negative electrode material is 1 to 20, and the granulation degree is 1 to 10 µm.

In some embodiments of the present application, designing the coating amount of the coating layer formed in the coating treatment step according to the direct current resistance data of the lithium ion battery button cell test prepared using the negative electrode material comprises: denoting R_{DCR} as the direct current resistance data of the lithium ion battery button cell test prepared using the negative electrode material, and T_{coating amount} as the coating amount of the coating layer, then 2 ≤ (13×R_{DCR}+0.07)/T_{coating amount} ≤ 500.

In some embodiments of the present application, the direct current resistance data of the lithium ion battery button cell test prepared using the negative electrode material is 2 to 20 Ω, and the coating amount is 0.5% to 4.0%, wherein the coating amount is the mass percentage of the coating layer to the core of the negative electrode material.

Another aspect of the present application provides a method for preparing a negative electrode material for a lithium ion battery, comprising: a pulverization step of pulverizing raw materials to form first powder having a first median particle size, wherein the first median particle size is designed according to the reversible gram capacity of the negative electrode material; a granulation step of granulating the first powder to form second powder having a second median particle size, the second median particle size being the sum of the first median particle size and a granulation degree, the granulation degree being designed according to the powder OI value of the negative electrode material; a graphitization step of converting the second powder into the core of the negative electrode material; a coating step of forming a coating layer on the surface of the core of the negative electrode material, wherein the coating amount of the coating layer is designed according to the direct current resistance data of a lithium ion battery button cell test prepared using the negative electrode material; and a carbonization step of further carbonizing the coating layer to form a carbon coating layer having an amorphous structure.

In some embodiments of the present application, the first median particle size designed according to the reversible gram capacity of the negative electrode material comprises: selecting raw materials and obtaining the volatile matter of the raw materials; and designing the first median particle size of the first powder according to the volatile matter of the raw materials and the reversible gram capacity of the negative electrode material.

In some embodiments of the present application, the first median particle size of the first powder is D₁50, then 3 ≤ D₁50×(0.71+0.39×D₁50/T_{volatile matter})+M_{reversible specific capacity}/372≤120, where T_{volatile matter} is the volatile matter of the raw material, and M_{reversible specific capacity} is the reversible gram capacity of the negative electrode material.

In some embodiments of the present application, the volatile matter of the raw material is 0.2% to 20%, the reversible gram capacity of the negative electrode material is 320 to 365 mAh/g, and the first median particle size of the first powder is 5 to 20 µm.

In some embodiments of the present application, the granulation degree designed according to the powder OI value of the negative electrode material comprises: denoting the powder OI value of the negative electrode material as G_{OI}, and the granulation degree as D_{granulation degree}, then 1 ≤ 100/(D_{granulation degree}+3.3× G_{OI}) ≤ 25.

In some embodiments of the present application, the powder OI value of the negative electrode material is 1 to 20, and the granulation degree is 1 to 10 µm.

In some embodiments of the present application, the coating amount of the coating layer designed according to the direct current resistance data of the lithium ion battery button cell test prepared using the negative electrode material comprises: denoting R_{DCR} as the direct current resistance data of the lithium ion battery button cell test prepared using the negative electrode material, and T_{coatingamount} as the coating amount, then 2 ≤ (13×R_{DCR}+0.07)/T_{coating amount} ≤ 500.

In some embodiments of the present application, the direct current resistance data of the lithium ion battery button cell test prepared using the negative electrode material is 2 to 20 Ω, and the coating amount is 0.5% to 4.0%, wherein the coating amount is the mass percentage of the coating layer to the core of the negative electrode material.

In some embodiments of the present application, the raw material comprises at least one of needle coke, petroleum coke, and pitch coke, and the negative electrode material is a graphite negative electrode material.

The present application further provides a negative electrode material for a lithium ion battery, prepared by any one of the above methods for preparing a negative electrode material for a lithium ion battery, comprising a core and a carbon coating layer having an amorphous structure coating the core.

Compared with the prior art, the present application provides a design method for a preparation process of a negative electrode material for a lithium ion battery, which is capable of designing the preparation process according to the target performance parameters of the negative electrode material, thereby enabling the formed negative electrode material to meet the target performance requirements of a lithium ion battery cell, satisfying both the requirements of the lithium ion battery for energy density and fast charging performance, and the requirements of the negative electrode material for low expansion performance.

The present application also provides a process for further preparing the negative electrode material for a lithium ion battery according to the designed method.

### DETAILED DESCRIPTION OF EMBODIMENTS

The following description provides specific application scenarios and requirements of the present application, and is intended to enable those skilled in the art to make and use the content of the present application. For those skilled in the art, various partial modifications to the disclosed embodiments are apparent, and the general principles defined herein may be applied to other embodiments and applications without departing from the spirit and scope of the present application. Therefore, the present application is not limited to the shown embodiments, but is consistent with the broadest scope of the claims.

One aspect of the embodiments of the present application provides a design method for a preparation process of a negative electrode material for a lithium ion battery, the preparation process of the negative electrode material for a lithium ion battery comprising pulverization, granulation, graphitization, coating treatment, and carbonization treatment steps, the design method comprising:
acquiring target performance parameters of the negative electrode material, the target performance parameters comprising at least one of the reversible gram capacity of the negative electrode material, the powder OI value of the negative electrode material, and the direct current resistance data of a lithium ion battery button cell test prepared using the negative electrode material;
designing the first median particle size of the first powder formed by pulverizing the raw materials in the pulverization step according to the reversible gram capacity of the negative electrode material; and/or
designing the granulation degree of the first powder in the granulation step according to the powder OI value of the negative electrode material, the granulation degree being the difference between the second median particle size of the first powder after granulation and the first median particle size before granulation; and/or
designing the coating amount of a coating layer formed in the coating treatment step according to the direct current resistance data of the lithium ion battery button cell test prepared using the negative electrode material, the coating layer being formed on the surface of the core of the negative electrode material formed after the graphitization step, the coating layer being a carbon coating layer having an amorphous structure.

The negative electrode material for a lithium ion battery may comprise a graphite negative electrode material. The graphite negative electrode material is mainly composed of graphite particles and is a crystal structure composed of carbon atoms having the characteristics of layered arrangement. The graphite negative electrode material usually exists in the form of natural graphite, artificial graphite, or graphene. The graphite negative electrode material according to the embodiments of the present application may be artificial graphite or natural graphite.

In some embodiments of the present application, the preparation process of the graphite negative electrode material may comprise process steps such as a pulverization step, a granulation step, a graphitization step, a coating treatment step, a carbonization treatment, and a finished product processing treatment.

The pulverization step according to the embodiments of the present application is a raw material processing step, which may comprise heat treatment and pulverization shaping. The heat treatment comprises, for example, subjecting raw materials such as needle coke, petroleum coke, pitch coke, and the like to heat treatment at a temperature of 0 to 1400°C, so that the structure and physical and chemical properties of the raw materials undergo certain changes. The raw materials after heat treatment may be pulverized and shaped by methods such as mechanical milling or roller milling to form first powder, and the uniformity and particle size of the first powder formed after the pulverization step are denoted by the first median particle size D₁50. The definition of the first median particle size D₁50 refers to the particle size at which 50% of the particles in the first powder have a smaller particle size.

The granulation step according to the embodiments of the present application is typically performed at a high temperature state. Equipment for performing the granulation step includes a horizontal reactor, a vertical reactor, and a continuous rotary reactor, among others. The process of the granulation step comprises, for example, adding a certain amount of pitch or resin materials to the first powder having the first median particle size D₁50 for the granulation process. During the granulation process, the particles of the first powder undergo agglomeration and are converted into second powder having a second median particle size D₂50. The second median particle size D₂50 is greater than the first median particle size D₁50, and the difference between the second median particle size D₂50 and the first median particle size D₁50 is defined as the granulation degree D_{granulation degree}. For example, after the granulation step, the first median particle size of the first powder increases from 8.5 micrometers to a second median particle size of 14 micrometers, so the granulation degree is 5.5 micrometers. The pitch and resin binder materials may serve as binders in the granulation process. In some embodiments of the present application, the addition amount (mass percentage content) of the pitch or resin materials is less than or equal to 30%. Optionally, the addition amount (mass percentage content) of the pitch or resin materials is less than or equal to 20%, for example, 15%, 10%, 8%, 6%, 3%, and the like. The addition amount of the pitch or resin materials may also be 0.

The graphitization step according to the embodiments of the present application subjects the second powder having the second median particle size D₂50 generated after the granulation step to pyrolysis at a high temperature, so as to form a graphite structure having high crystallinity, which is the core of the negative electrode material according to the embodiments of the present application. During the graphitization step, the graphite material undergoes structural changes: the intermolecular spacing decreases, and the lattice structure becomes more ordered. This structural change enables the graphite material to have better electrical conductivity and cycle stability. After the graphitization step, the core of the negative electrode material mainly comprises carbon elements, and may also comprise trace amounts of oxygen (O) elements. In the embodiments of the present application, the equipment for performing the graphitization step is not limited to crucible furnaces, box furnaces, internal series furnaces, and the like, and the reaction temperature of the graphitization step is 2800 to 3200°C.

The coating treatment step according to the embodiments of the present application includes solid-phase coating treatment and liquid-phase coating treatment, that is, the coating agents used include solid-phase coating agents and liquid-phase coating agents. The solid-phase coating treatment directly uses pitch or resin materials as coating agents to coat the surface of the core of the negative electrode material, forming a coating layer. The liquid-phase coating treatment may use a horizontal reactor or a vertical reactor to heat and melt the pitch or resin coating agent and then coat it on the surface of the core of the negative electrode material, forming a coating layer. The liquid-phase coating treatment may also use a low-coking-value solvent to prepare a coating agent that is liquid at room temperature, and use a fusion machine to coat the surface of the core of the negative electrode material, forming a coating layer.

In the embodiments of the present application, the formed coating layer may be a carbon coating layer. Compared with the carbon coating layer, the graphite core of the negative electrode material has a higher degree of order. The carbon coating layer can improve the fast charging performance of the negative electrode material. When the carbon coating layer is amorphous carbon, the amorphous carbon can increase the lithium ion intercalation speed at the surface layer of the negative electrode, and can improve the pulse charging performance of the negative electrode material. Therefore, by designing the coating amount of the coating layer in a targeted manner, the pulse charging requirement of the battery cell made from the negative electrode material can be fulfilled.

The carbonization treatment step according to the embodiments of the present application may use a roller kiln or a tunnel kiln as carbonization equipment, and heat the reaction chamber of the carbonization equipment to 900 to 1500°C under the protection of an inert gas, and further carbonize the coating layer at a temperature of 900 to 1500°C to form a carbon coating layer having an amorphous structure, thereby improving the electrochemical performance of the carbon coating layer.

After performing the carbonization treatment step, in order to better realize industrialization and mass production, the method according to the embodiments of the present application may also include a finished product processing step, that is, completing the processing treatment at the finished product stage through screening and magnetic separation treatment to meet the requirements for shipment.

Based on the above preparation process of the negative electrode material for a lithium ion battery, the design method comprises:
First, acquiring the target performance parameters of the negative electrode material, the target performance parameters comprising at least one of the reversible gram capacity of the negative electrode material, the powder OI value of the negative electrode material, and the direct current resistance data of a lithium ion battery button cell test prepared using the negative electrode material. The lithium ion battery is prepared using the negative electrode material according to the embodiments of the present application, and the present application does not limit the preparation method of the lithium ion battery. The target performance parameters may be numerical ranges set according to the performance requirements of the lithium ion battery.

Among them, the gram capacity refers to the ratio of the electrical capacity that can be released by the active material inside the battery to the mass of the active material. The reversible gram capacity refers to the ratio of the amount of charge that can be released by the active material during the charge and discharge process in a battery or supercapacitor to the electrode mass, that is, the reversibility of the charge during the charge and discharge process. It is usually expressed in units of mAh/g or Ah/kg. The reversible gram capacity reflects the charge loss during the charge and discharge process of a battery or supercapacitor, and is one of the important indicators for evaluating the performance of a battery or supercapacitor.

The powder orientation index (OI) value of the negative electrode material is abbreviated as the powder OI value. The powder OI value represents the expansion level of the negative electrode of the battery cell, and reflects the isotropy of the respective crystal phases of the grains at the electrode sheet level of the negative electrode material. The smaller the powder OI value, the better the isotropy of the respective crystal phases of the grains at the electrode sheet level, and the lower the expansion level of the negative electrode of the battery cell. Therefore, the granulation degree of the negative electrode material can be designed so that the OI value of the negative electrode of the battery cell made from the formed negative electrode material meets the target requirements, so as to satisfy the requirements of the battery cell side for the expansion level of the electrode sheet and the battery cell.

In the embodiments of the present application, the powder OI value of the negative electrode material may be denoted as G_{OI}, then G_{OI}= S004/S110, where S004 is the peak area of the 004 characteristic diffraction peak in the X-ray diffraction (XRD) pattern of the negative electrode material, and S110 is the peak area of the 110 characteristic diffraction peak in the X-ray diffraction pattern of the negative electrode material.

The lithium ion battery button cell test is a method for evaluating the capacity and performance of a lithium ion battery. Taking a button cell as an example, the method for making a button cell comprises mixing the negative electrode material and conductive carbon, carboxymethyl cellulose (CMC), and styrene-butadiene rubber (SBR) to prepare a battery slurry, coating the battery slurry on a current collector to form a negative electrode sheet, and then combining the negative electrode sheet, electrolyte, lithium sheet, and battery casing into a button cell. By measuring the voltage change of the button cell under specific conditions, the capacity of the button cell can be determined, and the performance and lifetime of the button cell can be evaluated. The button cell is first activated and cycled for one cycle, and then adjusted to 50% SOC for the lithium ion battery button cell test. The direct current resistance (DCR) data of the lithium ion battery button cell test may be denoted as R_{DCR}, and the test conditions are adjusting the charge and discharge rate of the lithium ion battery to 1C, discharging for 10s, and calculating the DCR of the lithium ion battery through the voltage relaxation during the rest period before and after the discharge of the lithium ion battery. Typically, the DCR test time is less than 30s.

Then, designing the first median particle size of the first powder formed by pulverizing the raw materials in the pulverization step according to the reversible gram capacity of the negative electrode material; and/or designing the granulation degree of the first powder in the granulation step according to the powder OI value of the negative electrode material, the granulation degree being the difference between the second median particle size of the first powder after granulation and the first median particle size before granulation; and/or designing the coating amount of the coating layer formed in the coating treatment step according to the direct current resistance data of the lithium ion battery button cell test prepared using the negative electrode material, the coating layer being formed on the surface of the core of the negative electrode material formed after the graphitization step.

In some embodiments of the present application, designing the first median particle size of the first powder formed by pulverizing the raw materials in the pulverization step according to the reversible gram capacity of the negative electrode material comprises: selecting raw materials for preparing the negative electrode material, and obtaining the volatile matter of the raw materials; and designing the first median particle size of the first powder according to the volatile matter of the raw materials and the reversible gram capacity of the negative electrode material.

The raw materials for preparing the negative electrode material comprise at least one of needle coke, petroleum coke, and pitch coke.

Volatile matter refers to the mass percentage content of the material obtained by subtracting the water content in the raw material from the substances that escape when the raw material is heated at a certain temperature while isolated from air, where a portion of the organic matter and minerals in the raw material decomposes into gas and liquid and escapes. In some embodiments of the present application, the volatile matter of the raw material is 0.2% to 20%, preferably 0.2% to 15%, for example, 1%, 3%, 5%, 6%, 8%, 9%, 12%, 16%, 18%, and the like.

In some embodiments of the present application, the first median particle size of the first powder formed by the pulverization step is denoted as D₁50, then 3 ≤ D₁50×(0.71+0.39×D₁50/T_{volatile matter})+M_{reversible specific capacity}/372 ≤ 120, where T_{volatile matter} is the volatile matter of the raw material, and M_{reversible specific capacity} is the reversible gram capacity of the negative electrode material, that is, the target reversible gram capacity, which is set according to the performance requirements of the lithium ion battery. According to the set reversible gram capacity, combined with the volatile matter of the raw material, the first median particle size of the first powder formed by the pulverization step can be designed.

Optionally, 3 ≤ D₁50×(0.71+0.39×D₁50/T_{volatile matter})+M_{reversible specific capacity}/372 ≤ 100.

In some embodiments of the present application, the volatile matter of the raw material is 0.2% to 20%, and the reversible gram capacity of the negative electrode material set by the target parameters is 320 to 365 mAh/g. Through 3 ≤ D₁50×(0.71+0.39×D₁50/T_{volatile matter})+M_{reversible} specific _{capacity}/372≤120, the first median particle size of the first powder can be obtained to be 5 to 20 µm.

In some embodiments of the present application, the volatile matter of the raw material is 0.2% to 15%, and the reversible gram capacity of the negative electrode material set by the target parameters is 335 to 360 mAh/g. Through 3 ≤ D₁50×(0.71+0.39×D₁50/T_{volatile matter})+M_{reversible} specific _{capacity}/372≤100, the first median particle size of the first powder can be obtained to be 7 to 15 µm.

In some embodiments of the present application, the pulverization step employs physical pulverization, and the first median particle size of the first powder is measured by using a laser diffraction particle size distribution measuring instrument (e.g., Mastersizer 3000) to measure the particle size distribution according to the laser diffraction method for particle size distribution (specifically referring to GB/T 19077-2016), and the median value of the volume distribution is used to represent the first median particle size. The volatile matter of the raw material may be detected by using a muffle furnace, and the detection result of burning the raw material at 900°C for 1 h is recorded as T_{volatile matter}.

In some embodiments of the present application, designing the granulation degree of the first powder in the granulation step according to the powder OI value of the negative electrode material comprises: denoting the powder OI value of the negative electrode material as G_{OI}, and the granulation degree as D_{granulation} degree, then 1 ≤ 100/(D_{granulation degree}+3.3×G_{OI}) ≤ 25. Optionally, 2 ≤ 100/(D_{granulation degree}+3.3×G_{OI}) ≤ 15.

In some embodiments of the present application, the powder OI value of the negative electrode material is 1 to 20, and according to 1 ≤ 100/(D_{granulation degree}+3.3×G_{OI}) ≤ 25, the granulation degree can be obtained to be 1 to 10 µm, for example, 3 µm, 5 µm, 6 µm, 8 µm, and the like. In some embodiments of the present application, the powder OI value of the negative electrode material is 1.5 to 10, and according to 2 ≤ 100/(D_{granulation degree}+3.3×G_{OI}) ≤ 15, the granulation degree can be obtained to be 1 to 7 µm.

In some embodiments of the present application, designing the coating amount of the coating layer formed in the coating treatment step according to the direct current resistance data of the lithium ion battery button cell test prepared using the negative electrode material comprises: denoting R_{DCR} as the direct current resistance data of the lithium ion battery button cell test prepared using the negative electrode material, and T_{coating amount} as the coating amount of the coating layer, then 2≤(13×R_{DCR}+0.07)/T_{coating amount}≤500. Optionally, 5≤ (13 ×R_{DCR}+0.07)/T_{coating amount} ≤ 400.

In some embodiments of the present application, the direct current resistance data of the lithium ion battery button cell test prepared using the negative electrode material is 2 to 20 Ω, and according to 2 ≤ (13×R_{DCR}+0.07)/T_{coating amount} ≤ 500, the coating amount can be obtained to be 0.5% to 4.0%, wherein the coating amount is the mass percentage of the coating layer to the core of the negative electrode material. In some other embodiments of the present application, the direct current resistance data of the lithium ion battery button cell test prepared using the negative electrode material is 3 to 15 Ω, and according to 5 ≤ (13×R_{DCR}+0.07)/T_{coating amount} ≤ 400, the coating amount is 0.75% to 3.5%.

By adopting the design method for the preparation process of the negative electrode material for a lithium ion battery according to this embodiment, the preparation parameters of the preparation process are designed through the target performance parameters of the negative electrode material, for example, obtaining the first median particle size of the first powder formed in the pulverization step through the reversible gram capacity of the negative electrode material, obtaining the granulation degree in the granulation step through the powder OI value of the negative electrode material, and obtaining the coating amount of the coating layer in the coating step through the direct current resistance data of the lithium ion battery button cell test prepared using the negative electrode material, so as to realize the parameter design of the preparation process of the negative electrode material.

Another aspect of the present application provides a method for preparing a negative electrode material for a lithium ion battery, comprising:
S1: performing a pulverization step of pulverizing raw materials to form first powder having a first median particle size, wherein the first median particle size is designed according to the target reversible gram capacity of the negative electrode material. Specifically, the first median particle size designed according to the target reversible gram capacity of the negative electrode material comprises: selecting raw materials and obtaining the volatile matter of the raw materials; and designing the first median particle size of the first powder according to the volatile matter of the raw materials and the target reversible gram capacity of the negative electrode material.

In some embodiments of the present application, the raw material of the negative electrode material comprises at least one of needle coke, petroleum coke, and pitch coke, the negative electrode material is graphite, and the coating layer is an amorphous carbon coating layer. Denoting T_{volatile matter} as the volatile matter of the raw material, M_{reversible} specific _{capacity} as the target reversible gram capacity of the negative electrode material, and D₁50 as the first median particle size of the first powder, then 3 ≤ D₁50×(0.71+0.39×D₁50/T_{volatile matter})+M_{reversible specific capacity}/372 ≤ 120.

In some embodiments of the present application, the volatile matter of the raw material is 0.2% to 20%, and the target reversible gram capacity of the negative electrode material is 320 to 365 mAh/g. Through 3 ≤ D₁50×(0.71+0.39×D₁50/T_{volatile matter})+M_{reversible specific capacity}/372 ≤ 120, the first median particle size of the first powder can be obtained to be 5 to 20 µm.

In some embodiments of the present application, the volatile matter of the raw material is 0.2% to 15%, and the target reversible gram capacity of the negative electrode material is 335 to 360 mAh/g. Through 3 ≤ D₁50×(0.71+0.39×D₁50/T_{volatile matter})+M_{reversible specific capacity}/372 ≤ 100, the first median particle size of the first powder can be obtained to be 7 to 15 µm.

S2: performing a granulation step of granulating the first powder to form second powder having a second median particle size, the second median particle size being the sum of the first median particle size and a granulation degree, the granulation degree being designed according to the powder OI value of the negative electrode material.

The second median particle size of the second powder is D₂50, where D₂50 = D₁50 + D_{granulation degree}; 1 ≤ 100/(D_{granulation degree}+3.3×G_{OI}) ≤ 25. The powder OI value G_{OI} = S004/S110, where S004 is the peak area of the 004 characteristic diffraction peak in the X-ray diffraction pattern of the powder of the negative electrode active material, and S 110 is the peak area of the 110 characteristic diffraction peak in the X-ray diffraction pattern of the powder of the negative electrode active material.

In some embodiments of the present application, the powder OI value of the negative electrode material is 1 to 20, and according to 1 ≤ 100/(D_{granulation degree}+3.3×G_{OI}) ≤ 25, the granulation degree can be obtained to be 1 to 10 µm, for example, 3 µm, 5 µm, 6 µm, 8 µm, and the like. When the first median particle size D₁50 of the first powder is 5 to 20 µm, the second median particle size D₂50 of the second powder can be obtained to be 6 to 30 µm.

In some embodiments of the present application, the powder OI value of the negative electrode material is 1.5 to 10, and according to 2 ≤ 100/(D_{granulation degree}+3.3×G_{OI}) ≤ 15, the granulation degree can be obtained to be 1 to 7 µm. When the first median particle size D₁50 of the first powder is 7 to 15 µm, the second median particle size D₂50 of the second powder is 8 to 22 µm.

S3: performing a graphitization step to convert the second powder into the core of the negative electrode material.

S4: continuing to perform a coating step to form a coating layer on the surface of the core of the negative electrode material, wherein the coating amount of the coating layer is designed according to the direct current resistance data of the lithium ion battery button cell test prepared using the negative electrode material.

In some embodiments of the present application, the coating amount of the coating layer designed according to the direct current resistance data of the lithium ion battery button cell test prepared using the negative electrode material comprises: denoting R_{DCR} as the direct current resistance data of the lithium ion battery button cell test prepared using the negative electrode material, and T_{coating amount} as the coating amount of the coating layer, then 2 ≤ (13×R_{DCR}+0.07)/T_{coating amount} ≤ 500. Optionally, 5 ≤ (13×R_{DCR}+0.07)/T_{coating amount} ≤ 400.

In some embodiments of the present application, the direct current resistance data of the lithium ion battery button cell test prepared using the negative electrode material is 2 to 20 Ω, and the coating amount is 0.5% to 4.0%, wherein the coating amount is the mass percentage of the coating layer to the core of the negative electrode material.

In some embodiments of the present application, the direct current resistance data of the lithium ion battery button cell test prepared using the negative electrode material is 2 to 20 Ω, and according to 2 ≤ (13×R_{DCR}+0.07)/T_{coating amount} ≤ 500, the coating amount can be obtained to be 0.5% to 4.0%, wherein the coating amount is the mass percentage of the coating layer to the core of the negative electrode material. In some other embodiments of the present application, the direct current resistance data of the lithium ion battery button cell test prepared using the negative electrode material is 3 to 15 Ω, and according to 5 ≤ (13×R_{DCR}+0.07)/T_{coating amount} ≤ 400, the coating amount is 0.75% to 3.5%.

S5: performing a carbonization step to further carbonize the coating layer to form a carbon coating layer having an amorphous structure.

After performing the carbonization treatment step, in order to better realize industrialization and mass production, the method according to the embodiments of the present application may also include an S5 finished product processing step.

In the production of negative electrode materials for lithium ion batteries, in order to obtain negative electrode materials with different reversible specific capacities and compaction densities, screening and pretreatment are required at the raw material stage. The level of volatile matter of the raw materials and the size of the first median particle size formed after the raw materials are pulverized directly affect the development of the crystallite size of the core of the negative electrode material in the subsequent graphitization step, which directly corresponds to the values of the compaction density and reversible gram capacity of the negative electrode material at the finished product stage. The lower the volatile matter of the raw materials, the larger the internal crystallites of the core of the negative electrode material are developed under the action of heat in the graphitization step, and the larger the first median particle size of the corresponding first powder, providing sufficient space for the development of crystallites in the subsequent graphitization step, and the higher the reversible gram capacity of the negative electrode material finally formed.

The preparation method for the negative electrode material for a lithium ion battery of the present application can achieve the target performance parameters of the negative electrode material for a lithium ion battery by controlling the first median particle size of the first powder formed in the pulverization step, the granulation degree in the granulation step, and the coating amount of the coating layer in the coating step, so as to ensure the application requirements of the negative electrode material at the battery cell end, and further meet the requirements of the battery cell system for the energy density and kinetics of the negative electrode material.

The present application also provides a negative electrode material for a lithium ion battery, which is prepared by any one of the above-mentioned methods for preparing a negative electrode material for a lithium ion battery, and comprises a core and a carbon coating layer having an amorphous structure coating the core.

The following further describes the implementation of the present application based on reference Examples 1 to 18.

### Examples 1 to 9:

Raw materials with volatile matter of 13.0±4.0% were respectively selected, for example, T_{volatile matter} of 9.0±1.0%, 4.0±1.0%, and 1.0±1.0%, respectively. The raw materials with different volatile matter values were respectively pulverized into first powders with different first median particle sizes D₁50, where the D₁50 ranges were 6 to 8 µm, 9 to 11 µm, and 14 to 16 µm, respectively. The first powders were granulated to form second powders. The second powders were subjected to graphitization and furnace processing to convert the second powders into the cores of the negative electrode material. The cores of the negative electrode material are graphite cores. Then, the reversible gram capacity of the graphite cores was measured. Among them, the pulverization step employs physical pulverization, and the first median particle size of the first powder is measured by using a laser diffraction particle size distribution measuring instrument (e.g., Mastersizer 3000) to measure the particle size distribution according to the laser diffraction method for particle size distribution (specifically referring to GB/T 19077-2016), and the median value of the volume distribution is used to represent the first median particle size D₁50. The volatile matter of the raw material is detected by using a muffle furnace, and the detection result of burning at 900°C for 1 h is recorded as T_{volatile matter}. The reversible gram capacity test method of the graphite core is as follows: the graphite core, carboxymethyl cellulose (CMC), styrene-butadiene rubber (SBR), and conductive carbon black SP are prepared at a ratio of 95.5:1.5:1.5:1.5 to make a slurry, and then the slurry is coated on a current collector and dried to make a button cell. The reversible gram capacity of the graphite core is tested and denoted as M_{reversible specific} capacity. The test data are shown in Table 1, where A = D₁50×(0.71+0.39×D₁50/T_{volatile matter})+M_{reversible specific capacity}/372.

**TABLE 1**

| | **D₁50 (µm)** | **Tᵥₒₗₐₜᵢₗₑ matter (%)** | **M_{reversible} specific capacity (mAh/g)** | **A** |
|---|---|---|---|---|
| Example 1 | 7 | 1.0±1.0% | 350 | 25.02 |
| Example 2 | 10 | 1.0±1.0% | 354 | 47.05 |
| Example 3 | 15 | 1.0±1.0% | 360 | 99.37 |
| Example 4 | 7 | 4.0±1.0% | 346 | 10.68 |
| Example 5 | 10 | 4.0±1.0% | 354 | 17.80 |
| Example 6 | 15 | 4.0±1.0% | 357 | 33.55 |
| Example 7 | 7 | 9.0±1.0% | 340 | 8.01 |
| Example 8 | 10 | 9.0±1.0% | 350 | 12.37 |
| Example 9 | 15 | 9.0±1.0% | 353 | 21.35 |

In the above Examples 1 to 9, the first median particle size D₁50 of the powders satisfies the relationship with the volatile matter of the raw materials and the reversible gram capacity of the graphite core material: 3 ≤ D₁50×(0.71+0.39×D₁50/T_{volatile matter})+M_{reversible specific capacity}/372 ≤ 120; that is, A is greater than or equal to 3 and less than or equal to 120.

### Examples 10 to 12:

The graphite core formed in Example 5 was selected, and a coating step was performed to form a coating layer on the surface of the graphite core. Then, a roller kiln was used as the equipment for the carbonization step. Under the protection of an inert gas, the temperature of the reaction chamber of the roller kiln was heated to 1200°C. The process was carried out at a temperature of 1200°C to further carbonize the coating layer to form a carbon coating layer having an amorphous structure, and a negative electrode material was prepared. The negative electrode material comprises a graphite core and an amorphous carbon coating layer coated on the surface of the graphite core. Among them, Example 10 employs a solid-phase coating treatment, and the graphite core is coated by directly mixing an asphalt coating agent, with a coating amount of 1%; Example 11 employs a liquid-phase coating treatment, and a resin coating agent is heated and melted using a horizontal reactor to coat the graphite core, with a coating amount of 2%; Example 12 employs a liquid-phase coating treatment, and a roomtemperature liquid coating material prepared by using a low-coking-value solvent is used to coat the graphite core using a fusion machine, with a coating amount of 3%.

The negative electrode materials formed in Examples 10 to 12 were made into button cells. The method for making button cells was as described in Examples 1 to 9. After initial calibration, the button cells were subjected to a DCR test. The test conditions were: the SOC was adjusted at a charge and discharge rate of 0.1C to 50% SOC, and a discharge test was performed for 10 s. The DCR data of the corresponding button cells were calculated through the test data. The test data are shown in Table 2, where B = (13×R_{DCR}+0.07)/T_{coating amount}.

**TABLE 2**

| | **Coating Amount (%)** | **R_{DCR} (Ω)** | **B** |
|---|---|---|---|
| Example 10 | 1.0 | 14.70 | 191.17 |
| Example 11 | 2.0 | 10.30 | 33.51 |
| Example 12 | 3.0 | 7.10 | 10.28 |

It can be seen from Table 2 that the values of T_{coating amount} and DCR in the above Examples 10 to 12 satisfy the relationship: 2 ≤ (13×R_{DCR}+0.07)/T_{coating amount} ≤ 500, that is, B is greater than or equal to 2 and less than or equal to 500.

### Examples 13 to 18:

In the design of the negative electrode material in the embodiments of the present application, the negative electrode material plays a vital role in the expansion of the product, seriously affecting the processability of the negative electrode material during use and the electrochemical performance of the final finished battery. The expansion of the product is closely related to the powder OI value of the negative electrode material. Therefore, the relationship between the powder OI value of the negative electrode material and the granulation degree is specified in the present application, with reference to Examples 13 to 18.

Examples 13 to 15: The first powder with a first median particle size D₁50 formed after the pulverization step in Example 1 was selected, and a granulation step was performed to generate second powder with a second median particle size D₂50. The equipment selected for the granulation step was a horizontal reactor, a vertical reactor, and a continuous rotary reactor, respectively. After granulation, the second powder was subjected to a graphitization step to form a graphite core of the negative electrode material, and the powder OI value of the graphite core was tested.

Examples 16 to 18: The first powder with a first median particle size D₁50 formed after the pulverization step in Example 2 was selected, and a granulation step was performed to generate second powder with a second median particle size D₂50. The equipment selected for the granulation step was a horizontal reactor, a vertical reactor, and a continuous rotary reactor, respectively. After granulation, the second powder was subjected to a graphitization step to form a graphite core of the negative electrode material, and the powder OI value of the graphite core was tested.

The first median particle size D₁50 and the second median particle size D₂50 of the first powder and the second powder formed in Examples 13 to 18 are respectively shown in Table 3. The measured powder OI values of the graphite cores are G_{OI} = S004/S110, where S004 is the peak area of the 004 characteristic diffraction peak in the X-ray diffraction pattern of the powder of the negative electrode active material, and S110 is the peak area of the 110 characteristic diffraction peak in the X-ray diffraction pattern of the powder of the negative electrode active material, where C = 100/(D_{granulation degree}+3.3×G_{OI}).

**TABLE 3**

| | **D₁50** | **D₂50** | **G_{OI}** | **D_{granulation degree}** | **C** |
|---|---|---|---|---|---|
| Example 13 | 7.00 | 10.00 | 5.37 | 3.00 | 4.83 |
| Example 14 | 7.00 | 13.00 | 3.11 | 6.00 | 6.15 |
| Example 15 | 7.00 | 16.00 | 1.53 | 9.00 | 7.12 |
| Example 16 | 10.00 | 13.00 | 6.34 | 3.00 | 4.18 |
| Example 17 | 11.00 | 16.00 | 4.27 | 5.00 | 5.24 |
| Example 18 | 10.00 | 19.00 | 2.09 | 9.00 | 6.29 |

It can be seen from Table 3 that the powder OI values and granulation degrees in the above Examples 13 to 18 satisfy the relationship: 1 ≤ 100/(D_{granulation degree}+3.3×G_{OI}) ≤ 25, that is, C is greater than or equal to 1 and less than or equal to 25.

Finally, it should be understood that the embodiments of the present application disclosed herein are explanations of the principles of the embodiments of the present application. Other modified embodiments are also within the scope of the present application. Therefore, the embodiments disclosed in the present application are merely examples and not limitations. Those skilled in the art may adopt alternative configurations according to the embodiments in the present application to implement the present application. Therefore, the embodiments of the present application are not limited to those embodiments that have been precisely described in the present application.

## Claims

1. A design method for a preparation process of a negative electrode material for a lithium ion battery, the preparation process comprising pulverization, granulation, graphitization, coating treatment, and carbonization treatment steps, **characterised in that** the design method comprises:
acquiring target performance parameters of the negative electrode material, the target performance parameters comprising at least one of a reversible gram capacity of the negative electrode material, a powder orientation index (OI) value of the negative electrode material, and direct current resistance data of a lithium ion battery button cell test prepared using the negative electrode material;
designing a first median particle size of first powder formed by pulverizing raw materials in the pulverization step according to the reversible gram capacity of the negative electrode material; and/or
designing a granulation degree of the first powder in the granulation step according to the powder OI value of the negative electrode material, the granulation degree being a difference between a second median particle size of the first powder after granulation and the first median particle size before granulation; and/or
designing a coating amount of a coating layer formed in the coating treatment step according to the direct current resistance data of the lithium ion battery button cell test prepared using the negative electrode material, the coating layer being formed on a surface of a core of the negative electrode material formed after the graphitization step, the coating layer being a carbon coating layer having an amorphous structure.

2. The design method for the preparation process of the negative electrode material for a lithium ion battery according to claim 1, wherein designing the first median particle size of the first powder formed by pulverizing the raw materials in the pulverization step according to the reversible gram capacity of the negative electrode material comprises: selecting raw materials for preparing the negative electrode material and obtaining volatile matter of the raw materials; and designing the first median particle size of the first powder according to the volatile matter of the raw materials and the reversible gram capacity of the negative electrode material.

3. The design method for the preparation process of the negative electrode material for a lithium ion battery according to claim 2, wherein the first median particle size of the first powder is D₁50, and 3 ≤ D₁50×(0.71+0.39×D₁50/T_{volatile matter})+M_{reversible specific capacity}/372 ≤ 120, where T_{volatile matter} is the volatile matter of the raw material, and M_{reversible} specific capacity is the reversible gram capacity of the negative electrode material.

4. The design method for the preparation process of the negative electrode material for a lithium ion battery according to claim 3, wherein the volatile matter of the raw material is 0.2% to 20%, the reversible gram capacity of the negative electrode material is 320 to 365 mAh/g, and the first median particle size of the first powder is 5 to 20 µm.

5. The design method for the preparation process of the negative electrode material for a lithium ion battery according to claim 1, wherein designing the granulation degree of the first powder in the granulation step according to the powder OI value of the negative electrode material comprises: denoting the powder OI value of the negative electrode material as G_{OI}, and the granulation degree as D_{granulation degree}, then 1 ≤ 100/(D_{granulation degree}+3.3×G_{OI}) ≤ 25.

6. The design method for the preparation process of the negative electrode material for a lithium ion battery according to claim 5, wherein the powder OI value of the negative electrode material is 1 to 20, and the granulation degree is 1 to 10 µm.

7. The design method for the preparation process of the negative electrode material for a lithium ion battery according to claim 1, wherein designing the coating amount of the coating layer formed in the coating treatment step according to the direct current resistance data of the lithium ion battery button cell test prepared using the negative electrode material comprises: denoting R_{DCR} as the direct current resistance data of the lithium ion battery button cell test prepared using the negative electrode material, and T_{coating amount} as the coating amount of the coating layer, then 2 ≤ (13×R_{DCR}+0.07)/T_{coating amount} ≤ 500.

8. The design method for the preparation process of the negative electrode material for a lithium ion battery according to claim 7, wherein the direct current resistance data of the lithium ion battery button cell test prepared using the negative electrode material is 2 to 20 Ω, and the coating amount is 0.5% to 4.0%, wherein the coating amount is a mass percentage of the coating layer to the core of the negative electrode material.

9. A method for preparing a negative electrode material for a lithium ion battery, comprising: a pulverization step of pulverizing raw materials to form first powder having a first median particle size, wherein the first median particle size is designed according to a reversible gram capacity of the negative electrode material; a granulation step of granulating the first powder to form second powder having a second median particle size, the second median particle size being a sum of the first median particle size and a granulation degree, the granulation degree being designed according to a powder OI value of the negative electrode material; a graphitization step of converting the second powder into a core of the negative electrode material; a coating step of forming a coating layer on a surface of the core of the negative electrode material, wherein a coating amount of the coating layer is designed according to direct current resistance data of a lithium ion battery button cell test prepared using the negative electrode material; and a carbonization step of further carbonizing the coating layer to form a carbon coating layer having an amorphous structure.

10. The method for preparing the negative electrode material for a lithium ion battery according to claim 9, wherein the first median particle size designed according to the reversible gram capacity of the negative electrode material comprises: selecting raw materials and obtaining volatile matter of the raw materials; and designing the first median particle size of the first powder according to the volatile matter of the raw materials and the reversible gram capacity of the negative electrode material.

11. The method for preparing the negative electrode material for a lithium ion battery according to claim 10, wherein the first median particle size of the first powder is D₁50, and 3 ≤ D₁50×(0.71+0.39×D₁50/T_{volatile matter})+M_{reversible specific capacity}/372≤120, where T_{volatile matter} is the volatile matter of the raw material, and M_{reversible} specific _{capacity} is the reversible gram capacity of the negative electrode material.

12. The method for preparing the negative electrode material for a lithium ion battery according to claim 11, wherein the volatile matter of the raw material is 0.2% to 20%, the reversible gram capacity of the negative electrode material is 320 to 365 mAh/g, and the first median particle size of the first powder is 5 to 20 µm.

13. The method for preparing the negative electrode material for a lithium ion battery according to claim 9, wherein the granulation degree designed according to the powder OI value of the negative electrode material comprises: denoting the powder OI value of the negative electrode material as G_{OI}, and the granulation degree as D_{granulation degree}, then 1 ≤ 100/(D_{granulation degree}+3.3 × G_{OI}) ≤ 25.

14. The method for preparing the negative electrode material for a lithium ion battery according to claim 13, wherein the powder OI value of the negative electrode material is 1 to 20, and the granulation degree is 1 to 10 µm.

15. The method for preparing the negative electrode material for a lithium ion battery according to claim 9, wherein the coating amount of the coating layer designed according to the direct current resistance data of the lithium ion battery button cell test prepared using the negative electrode material comprises: denoting R_{DCR} as the direct current resistance data of the lithium ion battery button cell test prepared using the negative electrode material, and T_{coating amount} as the coating amount, then 2 ≤ (13 ×R_{DCR}+0.07)/T_{coating amount} ≤ 500.

16. The method for preparing the negative electrode material for a lithium ion battery according to claim 15, wherein the direct current resistance data of the lithium ion battery button cell test prepared using the negative electrode material is 2 to 20 Ω, and the coating amount is 0.5% to 4.0%, wherein the coating amount is a mass percentage of the coating layer to the core of the negative electrode material.

17. The method for preparing the negative electrode material for a lithium ion battery according to claim 9, wherein the raw material comprises at least one of needle coke, petroleum coke, and pitch coke, and the negative electrode material is a graphite negative electrode material.

18. A negative electrode material for a lithium ion battery, prepared by the method of any one of claims 9 to 17, comprising a core and a carbon coating layer having an amorphous structure coating the core.
